(19) Europäisches Patentamt
European Patent Office
Office européen des brevets

(11) **EP 4 636 589 B1**

(12) **EUROPEAN PATENT SPECIFICATION**

(45) Date of publication and mention
of the grant of the patent:
**22.04.2026  Bulletin 2026/17**

(21) Application number: **25170355.9**

(22) Date of filing: **14.04.2025**

(51) International Patent Classification (IPC):
***G06F 9/455*** *(2018.01)*      ***G06F 11/34*** *(2006.01)*
***G06F 11/30*** *(2006.01)*

(52) Cooperative Patent Classification (CPC):
**G06F 9/45558; G06F 11/3006; G06F 11/301;
G06F 11/3452;** G06F 2009/4557;
G06F 2009/45579; G06F 2009/45591;
G06F 2201/81; G06F 2201/815

(54) **DEVICE SIDE THROTTLING OF A VIRTUAL MACHINE UNDER MIGRATION**

VORRICHTUNGSSEITIGE DROSSELUNG EINER VIRTUELLEN MASCHINE UNTER MIGRATION

LIMITATION CÔTÉ DISPOSITIF D'UNE MACHINE VIRTUELLE EN MIGRATION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **16.04.2024  US 202463634915 P
05.12.2024  US 202418970884**

(43) Date of publication of application:
**22.10.2025  Bulletin 2025/43**

(73) Proprietor: **Samsung Electronics Co., Ltd.
Suwon-si, Gyeonggi-do 16677 (KR)**

(72) Inventors:
• **AGRAWAL, Kumar Vipin
16677 Suwon-si, Gyeonggi-do (KR)**
• **HELMICK, Daniel Lee
16677 Suwon-si, Gyeonggi-do (KR)**

(74) Representative: **Kuhnen & Wacker
Patent- und Rechtsanwaltsbüro PartG mbB
Prinz-Ludwig-Straße 40A
85354 Freising (DE)**

(56) References cited:
**CN-A- 105 138 408    CN-A- 105 930 202**

**Description**

**TECHNICAL FIELD**

The subject matter disclosed here relates to memory systems. In particular, the subject matter relates to throttling a virtual machine under migration.

**BACKGROUND**

The present background section is intended to provide context only, and the disclosure of any concept in this section does not constitute an admission that said concept is prior art.

A virtual machine (VM) is a software-based computer that behaves like a physical computer. VMs can be made up of resources from a physical host computer or remote server, and can run programs, store data, connect to networks, and other computing functions. VMs can have their own operating system, storage, networking, configuration settings, and software, and can be fully isolated from other VMs running on that host. VM migration is the process of moving a VM from one physical hardware environment to another. VM migration may be referred to as teleportation. VM migration can be used in virtualization environments to optimize resource utilization, balance workload, and/or reduce downtime for maintenance and upgrades.

From CN 105 930 202 A it is known a three-threshold virtual machine migration policy that uses VM activeness to quantify load fluctuations and, by managing overload and light-load migration queues at the host level, redistributes VMs between suitable hosts in a cluster to reduce migration frequency and improve cloud service quality.

From CN 105 138 408 A it is known a virtual machine migration method based on OpenStack in which VMs with high comprehensive utilization (CPU, memory, disk) are added to a migration queue, and the VM at the head of the queue is migrated to a target physical machine selected based on utilisation thresholds and weight values, thereby improving overall resource utilisation of the physical machines.

The above information disclosed in this Background section is only for enhancement of understanding of the background of the disclosure and therefore it may contain information that does not constitute prior art.

**SUMMARY**

In various embodiments, the systems and methods described herein include systems, methods, and apparatuses for throttling a virtual machine under migration.

The invention is set out in the appended set of claims.

The systems and methods described herein include multiple advantages and benefits. For example, techniques of throttling a virtual machine under migration described herein include multiple advantages and benefits. Further, in some aspects, the systems and methods provide a simplified host protocol. Additionally, the systems and methods prevent or minimize sudden stoppage of the VM under migration. The systems and methods provide accurate independent rate limiting by a storage drive.

**BRIEF DESCRIPTION OF THE DRAWINGS**

The above-mentioned aspects and other aspects of the present systems and methods will be better understood when the present application is read in view of the following figures in which like numbers indicate similar or identical elements. Further, the drawings provided herein are for purpose of illustrating certain embodiments only; other embodiments, which may not be explicitly illustrated, are not excluded from the scope of this disclosure.

These and other features and advantages of the present disclosure will be appreciated and understood with reference to the specification, claims, and appended drawings wherein:

FIG. 1 illustrates an example system in accordance with one or more implementations as described herein.
FIG. 2 illustrates details of the system of FIG. 1, according to one or more implementations as described herein.
FIG. 3 illustrates an example system in accordance with one or more implementations as described herein.
FIG. 4 illustrates an example system in accordance with one or more implementations as described herein.
FIG. 5 depicts a flow diagram illustrating an example method associated with the disclosed systems, in accordance with example implementations described herein.
FIG. 6 depicts a flow diagram illustrating an example method associated with the disclosed systems, in accordance with example implementations described herein.

While the present systems and methods are susceptible to various modifications and alternative forms, specific embodiments thereof are shown by way of example in the drawings and will herein be described. The drawings may not be to scale. It should be understood, however, that the drawings and detailed description thereto are not intended to limit the present systems and methods to the particular form disclosed, but to the contrary, the invention is defined by the appended independent claims. The dependent claims define preferred embodiments.

## DETAILED DESCRIPTION OF VARIOUS EMBODIMENTS

The details of one or more embodiments of the subject matter described herein are set forth in the accompanying drawings and the description below. Other features, aspects, and advantages of the subject matter will become apparent from the description, the drawings, and the claims.

Various embodiments of the present disclosure now will be described more fully hereinafter with reference to the accompanying drawings, in which some, but not all embodiments are shown. Indeed, the disclosure may be embodied in many forms and should not be construed as limited to the embodiments set forth herein; rather, these embodiments are provided so that this disclosure will satisfy applicable legal requirements. The term "or" is used herein in both the alternative and conjunctive sense, unless otherwise indicated. The terms "illustrative" and "example" are used to be examples with no indication of quality level. Like numbers refer to like elements throughout. Arrows in each of the figures depict bi-directional data flow and/or bi-directional data flow capabilities. The terms "path," "pathway" and "route" are used interchangeably herein.

Embodiments of the present disclosure may be implemented in various ways, including as computer program products that comprise articles of manufacture. A computer program product may include a non-transitory computer-readable storage medium storing applications, programs, program components, scripts, source code, program code, object code, byte code, compiled code, interpreted code, machine code, executable instructions, and/or the like (also referred to herein as executable instructions, instructions for execution, computer program products, program code, and/or similar terms used herein interchangeably). Such non-transitory computer-readable storage media include all computer-readable media (including volatile and non-volatile media).

In one embodiment, a non-volatile computer-readable storage medium may include a floppy disk, flexible disk, hard disk, solid-state storage (SSS) (for example a solid-state drive (SSD)), solid state card (SSC), solid state module (SSM), enterprise flash drive, magnetic tape, or any other non-transitory magnetic medium, and/or the like. A non-volatile computer-readable storage medium may include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile computer-readable storage medium may include read-only memory (ROM), programmable read-only memory (PROM), erasable programmable read-only memory (EPROM), electrically erasable programmable read-only memory (EEPROM), flash memory (for example Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

In one embodiment, a volatile computer-readable storage medium may include random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory component (RIMM), dual in-line memory component (DIMM), single in-line memory component (SIMM), video random access memory (VRAM), cache memory (including various levels), flash memory, register memory, and/or the like. It will be appreciated that where embodiments are described to use a computer-readable storage medium, other types of computer-readable storage media may be substituted for or used in addition to the computer-readable storage media described above.

As should be appreciated, various embodiments of the present disclosure may be implemented as methods, apparatus, systems, computing devices, computing entities, and/or the like. As such, embodiments of the present disclosure may take the form of an apparatus, system, computing device, computing entity, and/or the like executing instructions stored on a computer-readable storage medium to perform certain steps or operations. Thus, embodiments of the present disclosure may take the form of an entirely hardware embodiment, an entirely computer program product embodiment, and/or an embodiment that comprises a combination of computer program products and hardware performing certain steps or operations.

Embodiments of the present disclosure are described below with reference to block diagrams and flowchart illustrations. Thus, it should be understood that each block of the block diagrams and flowchart illustrations may be implemented in the form of a computer program product, an entirely hardware embodiment, a combination of hardware and computer program products, and/or apparatus, systems, computing devices, computing entities, and/or the like carrying out instructions, operations, steps, and similar words used interchangeably (for example the executable instructions, instructions for execution, program code, and/or the like) on a computer-readable storage medium for execution. For example, retrieval, loading, and execution of code may be performed sequentially, such that one instruction is retrieved, loaded, and executed at a time. In some example embodiments, retrieval, loading, and/or execution may be performed in parallel, such that multiple instructions are retrieved, loaded, and/or executed together. Thus, such embodiments can produce specifically configured machines performing the steps or operations specified in the block diagrams and flowchart illustrations. Accordingly, the block diagrams and flowchart illustrations support various combinations of embodiments for performing the specified instructions, operations, or steps.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not be necessarily all referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "predetermined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. Similarly, various waveforms and timing diagrams are shown for illustrative purpose only. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-chip (SoC), an assembly, and so forth.

The following description is presented to enable one of ordinary skill in the art to make and use the subject matter disclosed herein and to incorporate it in the context of particular applications. While the following is directed to specific examples, other and further examples may be devised without departing from the basic scope thereof.

Various modifications, as well as a variety of uses in different applications, will be readily apparent to those skilled in the art, and the general principles defined herein may be applied to a wide range of embodiments. Thus, the subject matter disclosed herein is not intended to be limited to the embodiments presented, but is to be accorded the widest scope consistent with the principles and novel features disclosed herein.

In the description provided, numerous specific details are set forth in order to provide a more thorough understanding of the subject matter disclosed herein. It will, however, be apparent to one skilled in the art that the subject matter disclosed herein may be practiced without necessarily being limited to these specific details. In other instances, well-known structures and devices are shown in block diagram form, rather than in detail, in order to avoid obscuring the subject matter disclosed herein.

All the features disclosed in this specification (e.g., any accompanying claims, abstract, and drawings) may be replaced by alternative features serving the same, equivalent or similar purpose, unless expressly stated otherwise. Thus, unless expressly stated otherwise, each feature disclosed is one example only of a generic series of equivalent or similar features.

Various features are described herein with reference to the figures. It should be noted that the figures are only intended to facilitate the description of the features. The various features described are not intended as an exhaustive description of the subject matter disclosed herein or as a limitation on the scope of the subject matter disclosed herein. Additionally, an illustrated example need not have all the aspects or advantages shown. An aspect or an advantage described in conjunction with a particular example is not necessarily limited to that example and can be practiced in any other examples even if not so illustrated, or if not so explicitly described.

It is noted that, if used, the labels left, right, front, back, top, bottom, forward, reverse, clockwise and counterclockwise have been used for convenience purposes only and are not intended to imply any particular fixed direction. Instead, the labels are used to reflect relative locations and/or directions between various portions of an object.

Data processing may include data buffering, aligning incoming data from multiple communication lanes, forward error correction (FEC), etc. For example, data may be received by an analog front end (AFE), which can prepare the incoming data for digital processing. The digital portion of the transceivers (e.g., digital signal processor (DSP)) may provide skew management, equalization, reflection cancellation, and/or other functions. It is to be appreciated that the process described herein can provide many benefits, including saving both power and cost.

Moreover, the terms "system," "component," "module," "interface," "model," or the like are generally intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a controller and the controller can be a component. One or more components may reside within a process and/or thread of execution and a component may be localized on one computer and/or distributed between two or more computers.

Unless explicitly stated otherwise, each numerical value and range may be interpreted as being approximate, as if the word "about" or "approximately" preceded the value of the value or range. Signals and corresponding nodes or ports might be referred to by the same name and are interchangeable for purposes here.

While embodiments may have been described with respect to circuit functions, the embodiments of the subject matter disclosed herein are not limited. Possible implementations may be embodied in a single integrated circuit, a multi-chip module, a single card, SoC, or a multi-card circuit pack. As would be apparent to one skilled in the art, the various embodiments might also be implemented as part of a larger system. Such embodiments may be employed in conjunction with, for example, a digital signal processor, microcontroller, field-programmable gate array, application-specific integrated circuit, or general-purpose computer.

As would be apparent to one skilled in the art, various functions of circuit elements may also be implemented as processing blocks in a software program. Such software may be employed in, for example, a digital signal processor, microcontroller, or general-purpose computer. Such software may be embodied in the form of program code embodied in tangible media, such as magnetic recording media, optical recording media, solid-state memory, floppy diskettes, CD-ROMs, hard drives, or any other non-transitory machine-readable storage medium, that when the program code is loaded into and executed by a machine, such as a computer, the machine becomes an apparatus for practicing the subject matter disclosed herein. When implemented on a general-purpose processor, the program code segments combine with the processor to provide a unique device that operates analogously to specific logic circuits. Described embodiments may also be manifest in the form of a bit stream or other sequence of signal values electrically or optically transmitted through a medium, stored magnetic-field variations in a magnetic recording medium, etc., generated using a method and/or an apparatus as described herein.

The techniques described herein include logic to provide for throttling a virtual machine under migration. For example, the systems and methods may include rate limit logic (e.g., logic to estimate and/or calculate a rate limit). The logic includes any combination of hardware (e.g., at least one memory, at least one processor), logical circuitry, firmware, and/or software to provide for throttling a virtual machine under migration

In some examples, the systems and methods may throttle a VM under migration by monitoring the processing rate of the migration process and/or monitoring the buffer occupancy of a migration queue (e.g., migration logging buffer). The system and methods include throttling the VM under migration based on monitoring the buffer occupancy of the migration queue and/or monitoring the buffer occupancy of a submission queue of the VM. The systems and methods minimize or remove host side throttling (e.g., throttling by the source host of the VM).

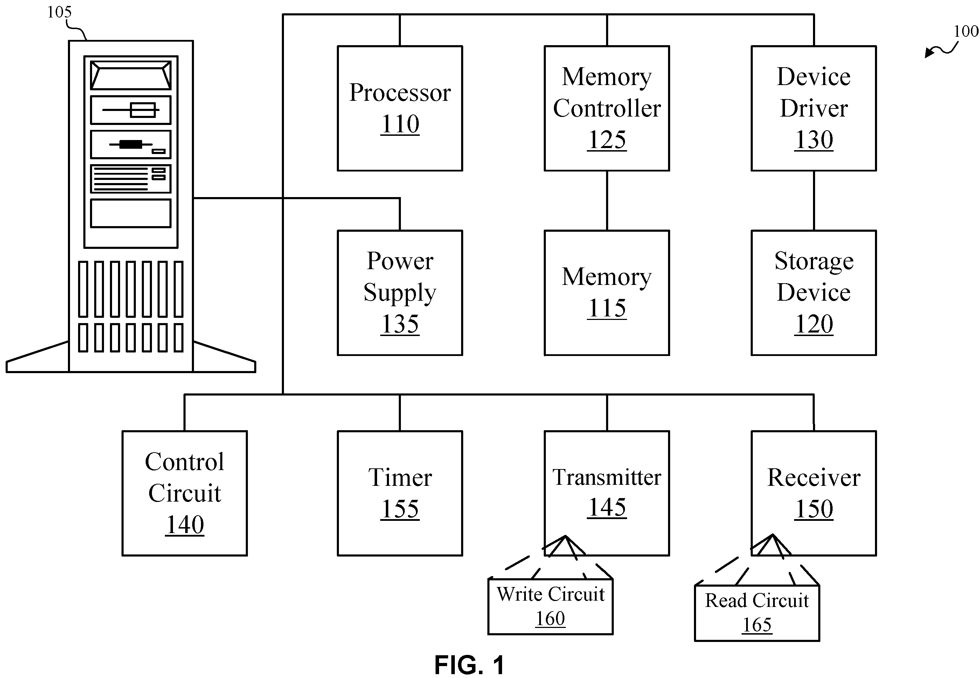

**FIG. 1** illustrates an example system 100 in accordance with one or more implementations as described herein. In FIG. 1, machine 105, which may be termed a host, a system, or a server, is shown. While FIG. 1 depicts machine 105 as a tower computer, embodiments of the disclosure may extend to any form factor or type of machine. For example, machine 105 may be a rack server, a blade server, a desktop computer, a tower computer, a mini tower computer, a desktop server, a laptop computer, a notebook computer, a tablet computer, etc.

Machine 105 may include processor 110, memory 115, and storage device 120. Processor 110 may be any variety of processor. It is noted that processor 110, along with the other components discussed below, are shown outside the machine for ease of illustration: embodiments of the disclosure may include these components within the machine. While FIG. 1 shows a single processor 110, machine 105 may include any number of processors, each of which may be single core or multicore processors, each of which may implement a Reduced Instruction Set Computer (RISC) architecture or a Complex Instruction Set Computer (CISC) architecture (among other possibilities), and may be mixed in any desired combination.

Processor 110 may be coupled to memory 115. Memory 115 may be any variety of memory, such as flash memory, Dynamic Random Access Memory (DRAM), Static Random Access Memory (SRAM), Persistent Random Access Memory, Ferroelectric Random Access Memory (FRAM), or Non-Volatile Random Access Memory (NVRAM), such as Magnetoresistive Random Access Memory (MRAM), Phase Change Memory (PCM), or Resistive Random-Access Memory (ReRAM). Memory 115 may include volatile and/or non-volatile memory. Memory 115 may use any desired form factor: for example, Single In-Line Memory Module (SIMM), Dual In-Line Memory Module (DIMM), Non-Volatile DIMM (NVDIMM), etc. Memory 115 may be any desired combination of different memory types, and may be managed by memory controller 125. Memory 115 may be used to store data that may be termed "short-term": that is, data not expected to be stored for extended periods of time. Examples of short-term data may include temporary files, data being used locally by applications (which may have been copied from other storage locations), and the like.

Processor 110 and memory 115 may support an operating system under which various applications may be running. These applications may issue requests (which may be termed commands) to read data from or write data to either memory 115 or storage device 120. When storage device 120 is used to support applications reading or writing data via some sort of file system, storage device 120 may be accessed using device driver 130. While FIG. 1 shows one storage device 120, there may be any number (one or more) of storage devices in machine 105. Storage device 120 may support any desired protocol or protocols, including, for example, the Non-Volatile Memory Express (NVMe) protocol, a Serial Attached Small Computer System Interface (SCSI) (SAS) protocol, or a Serial AT Attachment (SATA) protocol. Storage device 120 may include any desired interface, including, for example, a Peripheral Component Interconnect Express (PCIe) interface, or a Compute Express Link (CXL) interface. Storage device 120 may take any desired form factor, including, for example, a U.2 form factor, a U.3 form factor, a M.2 form factor, Enterprise and Data Center Standard Form Factor (EDSFF) (including all of its varieties, such as E1 short, E1 long, and the E3 varieties), or an Add-In Card (AIC).

While FIG. 1 uses the term "storage device," embodiments of the disclosure may include any storage device formats that may benefit from the use of computational storage units, examples of which may include hard disk drives, Solid State Drives (SSDs), or persistent memory devices, such as PCM, ReRAM, or MRAM. Any reference to "storage device" "SSD" below should be understood to include such other embodiments of the disclosure and other varieties of storage devices. In some cases, the term "storage unit" may encompass storage device 120 and memory 115. Machine 105 may include power supply 135. Power supply 135 may provide power to machine 105 and its components.

Machine 105 may include transmitter 145 and receiver 150. Transmitter 145 or receiver 150 may be respectively used to transmit or receive data. In some cases, transmitter 145 and/or receiver 150 may be used to communicate with memory 115 and/or storage device 120. Transmitter 145 may include write circuit 160, which may be used to write data into storage, such as a register, in memory 115 and/or storage device 120. In a similar manner, receiver 150 may include read circuit 165, which may be used to read data from storage, such as a register, from memory 115 and/or storage device 120.

In one or more examples, machine 105 may be implemented with any type of apparatus. Machine 105 may be configured as (e.g., as a host of) one or more of a server such as a compute server, a storage server, storage node, a network server, a supercomputer, data center system, and/or the like, or any combination thereof. Additionally, or alternatively, machine 105 may be configured as (e.g., as a host of) one or more of a computer such as a workstation, a personal computer, a tablet, a smartphone, and/or the like, or any combination thereof. Machine 105 may be implemented with any type of apparatus that may be configured as a device including, for example, an accelerator device, a storage device, a network device, a memory expansion and/or buffer device, a central processing unit (CPU), a graphics processing unit (GPU), a neural processing unit (NPU), a tensor processing unit (TPU), and/or the like, or any combination thereof.

Any communication between devices including machine 105 (e.g., host, computational storage device, and/or any intermediary device) can occur over an interface that may be implemented with any type of wired and/or wireless communication medium, interface, protocol, and/or the like including PCIe, NVMe, Ethernet, NVMe-oF, Compute Express Link (CXL), and/or a coherent protocol such as CXL.mem, CXL.cache, CXL.IO and/or the like, Gen-Z, Open Coherent Accelerator Processor Interface (OpenCAPI), Cache Coherent Interconnect for Accelerators (CCIX), Advanced eXtensible Interface (AXI) and/or the like, or any combination thereof, Transmission Control Protocol/Internet Protocol (TCP/IP), FibreChannel, InfiniBand, Serial AT Attachment (SATA), Small Computer Systems Interface (SCSI), Serial Attached SCSI (SAS), iWARP, any generation of wireless network including 2G, 3G, 4G, 5G, and/or the like, any generation of Wi-Fi, Bluetooth, near-field communication (NFC), and/or the like, or any combination thereof. In some embodiments, the communication interfaces may include a communication fabric including one or more links, buses, switches, hubs, nodes, routers, translators, repeaters, and/or the like. In some embodiments, system 100 may include one or more additional apparatus having one or more additional communication interfaces.

Any of the functionality described herein, including any of the host functionality, device functionally, control circuit 140 functionality, and/or the like, may be implemented with hardware, software, firmware, or any combination thereof including, for example, hardware and/or software combinational logic, sequential logic, timers, counters, registers, state machines, volatile memories such as dynamic random access memory (DRAM) and/or static random access memory (SRAM), nonvolatile memory including flash memory, persistent memory such as cross-gridded nonvolatile memory, memory with bulk resistance change, phase change memory (PCM), and/or the like and/or any combination thereof, complex programmable logic devices (CPLDs), field programmable gate arrays (FPGAs), application specific integrated circuits (ASICs) CPUs including complex instruction set computer (CISC) processors such as x86 processors and/or reduced instruction set computer (RISC) processors such as RISC-V and/or ARM processors), graphics processing units (GPUs), neural processing units (NPUs), tensor processing units (TPUs) and/or the like, executing instructions stored in any type of memory. In some embodiments, one or more components of control circuit 140 may be implemented as a SoC.

In some examples, control circuit 140 may include any one or combination of logic (e.g., logical circuit), hardware (e.g., processing unit, memory, storage), software, firmware, and the like. In some cases, control circuit 140 may perform one or more functions in conjunction with processor 110, memory 115, and/or storage device 120. In some cases, at least a portion of control circuit 140 may be implemented in or by processor 110, memory 115, and/or storage device 120. The one or more logic circuits of control circuit 140 may include any one or combination of multiplexers, registers, logic gates, arithmetic logic units (ALUs), cache, computer memory, microprocessors, processing units (CPUs, GPUs, NPUs, and/or TPUs), FPGAs, ASICs, etc., that enable control circuit 140 to provide for throttling a virtual machine under migration.

In one or more examples, control circuit 140 may provide migration rate limiting at a storage device (e.g., storage device 120). In one or more examples, control circuit 140 throttling a virtual machine under migration (e.g., live migration) as described herein provides multiple advantages and benefits. Further, in some aspects, the systems and methods provide a simplified host protocol. Additionally, the systems and methods prevent or minimize sudden stoppage of the VM under migration. The systems and methods provide accurate independent rate limiting by a storage drive.

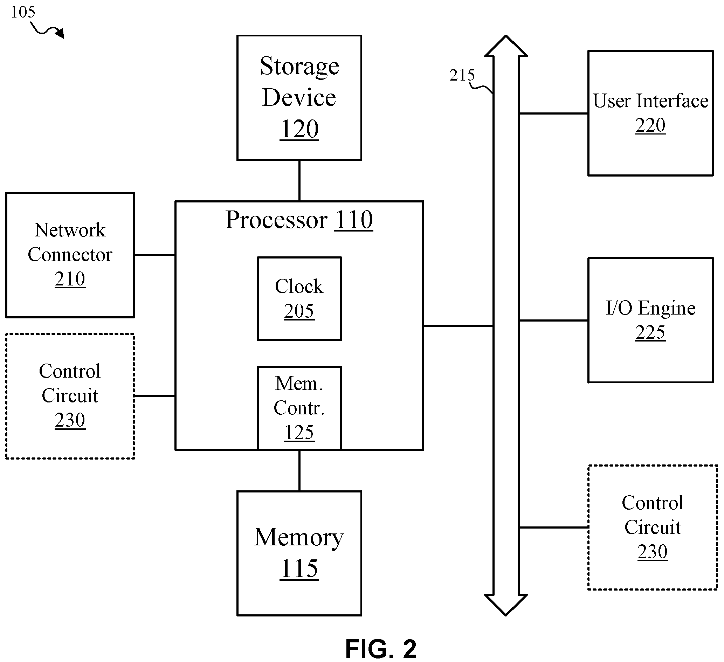

**FIG. 2** illustrates details of machine 105 of FIG. 1, according to examples described herein. In the illustrated example, machine 105 may include one or more processors 110, which may include memory controllers 125 and clocks 205, which may be used to coordinate the operations of the components of the machine. Processors 110 may be coupled to memories 115, which may include random access memory (RAM), read-only memory (ROM), or other state preserving media, as examples. Processors 110 may be coupled to storage devices 120, and to network connector 210, which may be, for example, an Ethernet connector or a wireless connector. Processors 110 may be connected to buses 215, to which may be attached user interfaces 220 and Input/Output (I/O) interface ports that may be managed using I/O engines 225, among other components. As shown, processors 110 may be coupled to control circuit 230, which may be an example of control circuit 140 of FIG. 1. Additionally, or alternatively, processors 110 may be connected to buses 215, to which may be attached control circuit 230.

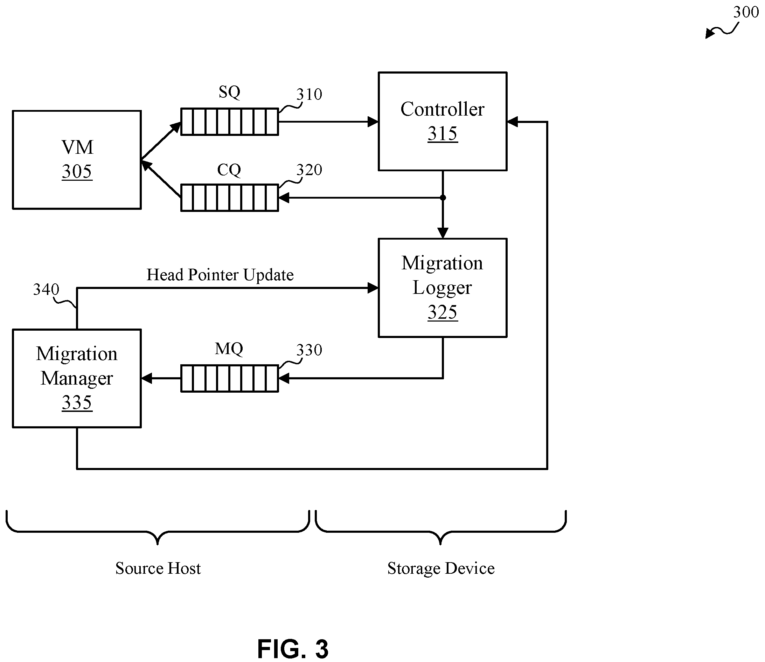

**FIG. 3** illustrates an example system 300 in accordance with one or more implementations as described herein. In the illustrated example, system 300 includes virtual machine (VM) 305, submission queue (SQ) 310, controller 315, completion queue (CQ) 320, migration logger 325, migration queue (MQ) 330, and migration manager 335. In some examples, VM 305, SQ 310, CQ 320, MQ 330, and/or migration manager 335 may be associated with or incorporated in a host (e.g., source host, source server, machine 105, etc.). Additionally, or alternatively, controller 315 and/or migration logger 325 may be associated with or incorporated in a storage device (e.g., at least one source storage device, source SSD, storage device 120, etc.).

VM 305 is a virtual machine. Thus, VM 305 may include a software-based computer that behaves like a physical computer, but uses virtual resources instead of physical components. VM 305 may be created by a hypervisor, a specialized operating system that sits between the physical hardware and the VM. SQ 310 may include a data structure that holds packets or messages that are waiting to be processed or are currently being processed. Controller 315 may include a processor (e.g., microcontroller, ASIC, FPGA, etc.) configured to control one or more aspects of a migration. In some cases, controller 315 may include a storage controller. Thus, controller 315 may include a hardware processing component within a given system that manages the flow of data between a central processing unit and a storage device (e.g., SSD). CQ 320 may include a data structure that stores completed work requests and notifies an application of their status. CQ 320 may be used to report events related to data transfers, such as message sends and receives, atomic operations, and triggered events, etc. Migration logger 325 may be configured to log or record operations taken during a migration. MQ 330 may include a data structure configured to hold data sets and subsets of data sets moved during a migration. In some cases, migration manager 335 may manage one or more aspects of a migration on the source host side.

A migration manager (e.g., migration manager 335) may be referred to as a hypervisor, a virtual machine manager (VMM), or a host system administrator. The VMM can be responsible for managing the VM (e.g., VM 305). The VMM may set up the division and virtualization of actual resources on a machine such as host DRAM, host compute threads, security boundaries and enablements to secure and separate the various co-located VMs on the host system, access to the IO devices such as storage, networking, FPGA and other resources, virtualize the DRAM address range such that a VM is not aware of the physical locations of the memory the VM is using, verifying the security of all connected devices and security of the VM itself (e.g., attestations trusted computer group (TCG) key ranges, name space (NS) access enablement, etc.). Additionally, or alternatively, the VMM may provide direct access to some parts of one or more devices while virtualizing the access to other parts of such devices. Virtualization may include presenting the VM with a software interface representative of the real hardware interface. The VMM may then use the software interface to receive interactions with devices. The VMM may examine these interactions and choose to create a software response, change the command and pass it through to the hardware device, or pass the command unchanged to the hardware device. Responses can similarly go from hardware device through the virtualization layer created by the VMM and then into the software representation layer. One VMM can be implemented on each host system. A VMM can communicate with other VMMs so that the VMMs can coordinate together and effectively orchestrate as if they are one VMM across more than one host. Thus, a VMM can coordinate the migration of the VM as described herein. VMMs can move the VM stored data, VM memory, and VM processing threads from one machine to another.

VM 305 may be identified to the "storage device" of system 300 based on at least one of the following: PCIe function (e.g., virtual function, physical function), NVM subsystem, NVM controller, reclaim unit handle (RUH) based on flexible data placement (FDP), reclaim group (RG) based on FDP, endurance group, namespace, one or more SQs, etc.

VM 305 may undergo a migration from a source host to a target host. Migration manager 335 may configure migration logger 325 to assist with the migration of the user data associated with VM 305 (e.g., by snooping activity on controller 315). Live migration refers to the process of moving a virtual machine (e.g., VM 305) running on a first physical host (e.g., source server) to a second physical host (e.g., destination server) without disrupting operations or causing any downtime or other adverse effects for end users. Live migration can include configuring migration settings and transferring memory pages from source to target, including transferring user data of VM 305 stored on the device via controller 315 and/or any modifications to memory pages (e.g., live modifications) that occur while the memory pages are being transferred. Memory pages may include data in memory of VM 305 (e.g., DRAM of VM 305), data in one or more storage devices of VM 305 (e.g., data stored in SSDs), etc. Live migration can include moving the stored data from the first host to the second host and bringing the target VM online on the second host. Aspects of live migration may be based on one or more circular buffers. In some cases, SQ 310, CQ 320, and/or MQ 330 may be configured as circular buffers.

In some cases, host memory is where SQ 310, CQ 320, and/or MQ 330 may reside. In some examples, a drive may fetch data and/or put the data relevant to reads and writes in MQ 330. With live migration, a drive can track changes on an SSD of the source host and/or on the VM of the source host (e.g., VM 305) depending on the settings issued by a migration manager (e.g., migration manager 335). In some examples, VM 305 may write an LBA and trigger a logging event to MQ 330 (e.g., a logging event to MQ 330 via migration logger 325) in addition to the data writing. It is noted that logging of migration data to MQ 330 may be done by migration logger 325 in response to the LBA write from VM 305 (e.g., after the write is performed to the storage medium (e.g., NAND) and/or registered by controller 315). In one or more examples, VM 305 may read an LBA and trigger a logging of the host memory getting written in addition to the data being transferred from the drive to the host memory. In some cases, the reads may be logged in an internal buffer that has a bitmap inside the drive rather than in an entry of MQ 330. The host may query the bitmap intermittently rather than examining MQ 330 and parsing for potential events of memory dirtying.

It is noted that MQ 330 may be a circular FIFO. As MQ entries (MQEs) are processed, the host may inform the storage device that the tail is processed. The storage device may insert new MQEs into MQ 330 as the MQEs are generated. When MQ 330 is full, then the storage device may stop processing VM commands, or the storage device may alert the VMM that the migration attempt has failed as some MQEs were missed, or other indeterminate behavior may be supported. Nominal operation may not have a full MQ. For every Write command submitted to the storage device by VM 305, at least one MQE could be generated. An MQE may include a starting LBA that was written (e.g., dirtied) and a length (e.g., number of LBAs). One MQE may combine several dirtied LBAs from different commands. Similarly, a write command may generate more than one MQE. For example, a relatively long write command with many LBAs may send one MQE for every LBA and use the length parameter set to 1 for each MQE. The systems and methods described herein may be applied to MQEs for write commands, but the systems and methods described herein may be implemented for read commands, where the host memory locations that are dirtied by the drive placing data in those locations may be tracked. Commands other than a write command may trigger an MQE, such as TRIM or deallocate, NS Format, Sanitize, NS sanitize, etc.

A circular buffer (e.g., circular queue, cyclic buffer, ring buffer) may include a data structure that uses a single, constant-size buffer linked end to end. A circular buffer can include an array of constant length that may be used to store data in a continuous loop or store data circularly. Data may be read from a circular buffer in a first in first out (FIFO) manner. A circular buffer may be used to store and transfer data between two points, such as a data producer and a data consumer. Circular buffers can include a pointer that points to the next empty position of the buffer, and the pointer may be incremented with each new entry in the buffer. In some cases, a circular buffer may include two pointers, a head pointer and a tail pointer. The tail pointer may point to the tail of the buffer, or the location where the next element is inserted (e.g., the next empty or next available position of the buffer). The head pointer may point to the head of the buffer, or the location of the oldest element in the buffer. When head+1 = tail, then the circular buffer is empty. When tail+1 = head, then the buffer is full. In some cases, when the head pointer and tail pointer meet, the buffer may be considered full. When the buffer is full and a new element is added, the oldest entry in the buffer may be overwritten, ensuring that the buffer does not overflow. Thus, a circular buffer may not require shifting elements to make room for new data when the buffer is full. Instead, when the buffer is full, new data may be written over the oldest data. In some cases, the head pointer may point to the location where a next element is inserted, and the tail pointer may point to the location of the oldest element in the buffer. For example, in some cases, data may be inserted at the head and consumed at the tail.

In the illustrated example, VM 305 may submit a user data write command to controller 315 via SQ 310. Controller 315 may read a user data write command from SQ 310 and execute the user data write to the device (e.g., second host). Controller 315 may indicate a command is completed via CQ 320. Migration logger 325 may log changes in the user data belonging to VM 305 in a changed user data log. Migration logger 325 may provide the changed user data log to MQ 330 by writing the log at the tail pointer of MQ 330. Migration manager 335 may acquire the changed user data log from MQ 330 and provide the changed user data to a target host. In some cases, migration manager 335 may read the changed data from the device (e.g., source host), and send the changed data to the target host as part of live migration. It is noted that data may be read from the storage device by submitting read IO commands to controller 315. In some cases, a target controller could be on different machine, the same machine, or the same storage device. The systems and methods may be applied to a source SSD connected to a source host, where the source host is connected to the destination host and the destination host has a destination SSD. In some cases (e.g., after processing the changed user data log from MQ 330), migration manager 335 may provide head pointer update 340 to migration logger 325. In some cases, head pointer update 340 may indicate that an entry of MQ 330 is processed. Additionally, or alternatively, head pointer update 340 may indicate how full MQ 330 is by comparing head and tail pointers of MQ 330.

With some approaches, when a migration task of migration manager 335 is not able to keep up with incoming migration data at MQ 330 (e.g., MQ 330 is filling up faster that migration manager 335 can process the data), processing of the user data (e.g., user data writes from VM 305) may be stopped by controller 315 (e.g., paused, stopped completely, stopped suddenly), which can severely impact system efficiency (e.g., performance of VM 305). Accordingly, migration manager 335 may send a command to controller 315 instructing controller 315 to rate limit the migration process (e.g., throttle or rate limit the processing of commands in SQ 310). For example, controller 315 may throttle reads and/or writes issued by VM 305. In some cases, additional commands and/or overhead may be associated with a given command in SQ 310, increasing the chance of migration manager 335 applying a mismatched rate limit. Calculating a precise rate limit can be a challenge for migration manager 335. In some cases, system latency in applying rate limit updates may result in the rate limiting being too slow or too fast.

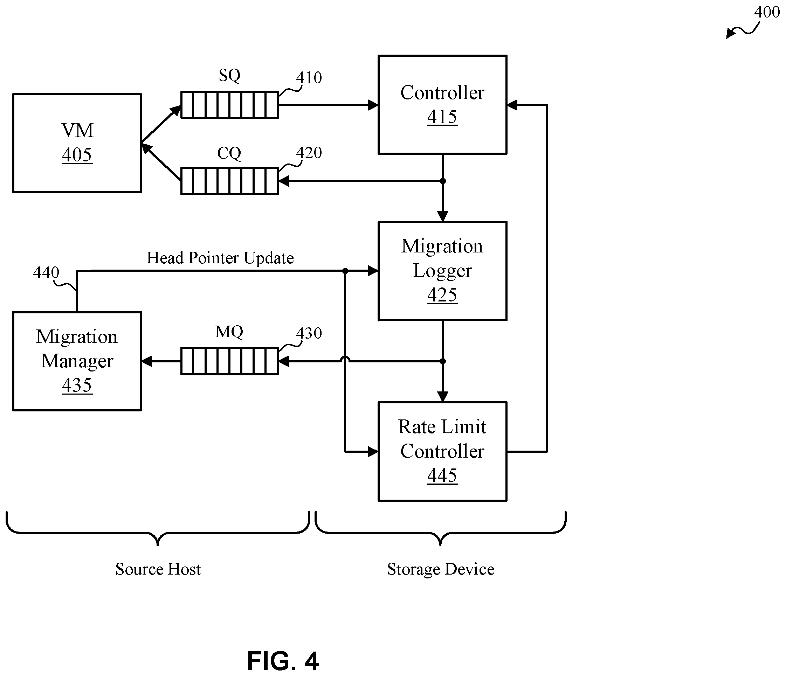

**FIG.** 4 illustrates an example system 400 in accordance with one or more implementations as described herein. System 400 may be configured to provide throttling of a virtual machine under migration. In the illustrated example, system 400 includes virtual machine (VM) 405, submission queue (SQ) 410, controller 415, completion queue (CQ) 420, migration logger 425, migration queue (MQ) 430, migration manager 435, and rate limit controller 445. In some examples, VM 405, SQ 410, CQ 420, MQ 430, and/or migration manager 435 may be associated with or incorporated in a host (e.g., source host, source server, machine 105, etc.). Additionally, or alternatively, controller 415, migration logger 425, and/or rate limit controller 445 may be associated with or incorporated in a storage device associated with VM 405 (e.g., at least one source storage device, source SSD, storage device 120, etc.).

VM 405 is a virtual machine. Thus, VM 405 may include a software-based computer that behaves like a physical computer, but uses virtual resources instead of physical components. VM 405 may be created by a hypervisor, a specialized operating system that sits between the physical hardware and the VM. SQ 410 may include a data structure that holds packets or messages that are waiting to be processed or are currently being processed. Controller 415 may include a processor (e.g., microcontroller, ASIC, FPGA, etc.) configured to control one or more aspects of a migration. In some cases, controller 415 may include a storage controller. Thus, controller 415 may include a hardware processing component within a given system that manages the flow of data between a central processing unit and a storage device (e.g., SSD). CQ 420 may include a data structure that stores completed work requests and notifies an application of their status. CQ 420 may be used to report events related to data transfers, such as message sends and receives, atomic operations, and triggered events, etc. Migration logger 425 may be configured to log or record operations taken during a migration. MQ 430 may include a data structure configured to hold data sets and subsets of data sets moved during a migration. In some cases, migration manager 435 may manage one or more aspects of a migration on the source host side. Rate limit controller 445 include a second processor (e.g., microcontroller, ASIC, FPGA, etc.) configured to control one or more aspects of migration described herein. As shown, rate limit controller 445 may be implemented in a storage device, unloading control of migration from the source host to the storage device.

Based on the systems and methods described herein, rate limit controller 445 may determine (e.g., estimate, calculate) a rate limit and instruct controller 415 to throttle VM 405 based on the determined rate limit. In some examples, controller 445 may be configured to adjust its own behavior (e.g., adjust rate at which SQ 310 is accessed; adjust behavior independent of VM 305). In some cases, controller 315 may alert the host (e.g., source host). In some cases, the host may query the behavior of the storage device. The host may set or change the parameters of the throttling of the storage device to suit the needs of the system at any given time. For example, the host may get relatively busy because a network connection goes down (e.g., which may be the reason for migrating the VMs off this host), and the host may request the storage device do additional or increased throttling to pull down the activity of the storage device and allow the host to accelerate the migration. In some cases, rate limit controller 445 may determine the processing rate of migration manager 435 based on head pointer update 440. In some cases, head pointer update 440 may be periodic, aperiodic, provided upon request, etc. For example, migration manager 435 may provide head pointer update 440 periodically, aperiodically, or based on a request from rate limit controller 445. In some cases, head pointer update 440 may indicate a rate at which migration manager 435 is processing data in MQ 430. In some cases, head pointer update 440 may indicate the processing rate of migration manager 435 based on a rate of head pointer ($R_{HP}$) movement of MQ 430, which may be determined based on the following equation:

$$R_{HP} = \frac{HP(n)-HP(n-1)}{t_n-t_{n-1}}$$

where HP(n) is a current head pointer location at time n, HP(n-1) is a previous head pointer location at time n-1, $t_n$ is the time at n, and $t_{n-1}$ is the time at n-1. In some examples, head pointer update 440 may indicate head pointer location at a given time and rate limit controller 445 may determine $R_{HP}$ based on at least two instances of head pointer update 440 received at different times. In some cases, a rate at which live migration is throttled may be based on $R_{HP}$.

In some cases, head pointer update 440 may indicate the processing rate of migration manager 435 based on an average $R_{HP}$ ($AvgR_{HP}$) movement of MQ 430, which may be determined based on the following equation:

$$AvgR_{HP} = \frac{HP(n)-HP(n-m)}{t_n-t_{n-m}}$$

where HP(n) is a current head pointer location at time n, and where HP(n-m) is a span of m previous head pointer locations over time interval n-m to n. In some examples, head pointer update 440 may indicate head pointer locations at given times and rate limit controller 445 may determine $AvgR_{HP}$ based on multiple instances of head pointer update 440 received over a span of time. In some cases, a rate at which live migration is throttled may be based on $AvgR_{HP}$.

In some cases, head pointer update 440 may indicate the processing rate of migration manager 435 based on a weighted average $R_{HP}$ ($WAvgR_{HP}$) movement of MQ 430, which may be determined based on the following equation:

$$WAvgR_{HP} = \frac{Sum(W*R_{HP})}{Sum(W)}$$

where each instance of $R_{HP}$ is the rate of HP movement at a given time over a time interval, W is a given weight assigned to each instance of $R_{HP}$ (e.g., W1 applied to $R_{HP}1$, W2 applied to $R_{HP}2$, W3 applied to $R_{HP}3$, and so on). In some examples, more importance (e.g., higher W) may be applied to $R_{HP}$ values closer to a present time compared to values further in the past. In some cases, W can be a forgetting factor, where a forgetting factor can be a parameter that controls the performance of a recursive least-squares (RLS) algorithm in parameter estimation. A forgetting factor can be a function of system noise variances that is updated recursively. In some cases, a forgetting factor can be a positive value between 0.98 and 0.995. In some cases, a rate at which live migration is throttled may be based on $WAvgR_{HP}$.

In some cases, head pointer update 440 may indicate the processing rate of migration manager 435 based on a low pass filter associated with one or more rates of head pointer ($R_{HP}$) movement of MQ 430, which may be determined based on at least the following equations:

$$R_{HP\_1} = \frac{HP(n)-HP(n-1)}{t_n-t_{n-1}}$$

$$R_{HP\_2} = \frac{HP(n-1)-HP(n-2)}{t_{n-1}-t_{n-2}}$$

where HP(n) is a current head pointer location at time n ($t_n$), where HP(n-1) is a previous head pointer location at time n-1 ($t_{n-1}$), and where HP(n-2) is a previous head pointer location at time n-2 ($t_{n-2}$). In some cases, a rate at which live migration is throttled may be based on $R_{HP\_1}$ and/or $R_{HP\_2}$.

In some examples, rate limit controller 445 may apply a rate limit based on a buffer occupancy of MQ 430. The occupancy of MQ 430 indicates how full MQ 430 is. A relatively low occupancy indicates MQ 430 is empty or near empty (e.g., 0% to 30% full). A middle occupancy indicates MQ 430 is filled to a level relatively near half capacity (e.g., 40% to 60% full). A relatively high occupancy indicates MQ 430 is at or near full capacity (e.g., 70% to 100% full).

When rate limit controller 445 determines that the buffer occupancy of MQ 430 is less than (e.g., less than or equal to) a first threshold, then rate limit controller 445 may apply a default rate limit (e.g., no rate limit, zero rate limit, relatively low rate limit), and instruct controller 415 to implement the rate limit accordingly.

When rate limit controller 445 determines that the buffer occupancy of MQ 430 is greater than (e.g., greater than or equal to) the first threshold and less than (e.g., less than or equal to) a second threshold, then rate limit controller 445 may set the rate limit to the average head pointer movement (e.g., $AvgR_{HP}$), and instruct controller 415 to implement the rate limit accordingly.

When rate limit controller 445 determines that the buffer occupancy of MQ 430 is greater than (e.g., greater than or equal to) the first threshold and greater than (e.g., greater than or equal to) the second threshold, then rate limit controller 445 may apply a scaling factor ($\beta$) to the average head pointer movement (e.g., $\beta * avgRhp$) to increase rate limiting, and instruct controller 415 to implement the rate limit accordingly.

In some examples, rate limit controller 445 may adjust the rate limit based on a ratio of the processing rate of MQ 430 to the command insertion rate of SQ 410 from VM 405. For example, rate limit controller 445 may monitor the tail pointer of SQ 410 (e.g., SQ doorbell) via controller 415. Thus, rate limit controller 4415 may modify the rate limit based on the ratio of the processing rate of MQ 430 to the processing rate of SQ 410. In some cases, rate limit controller 445 may determine the MQ to SQ ratio based on the following equation:

$$\text{MQ to SQ ratio} = \frac{HP(n) - HP(n-1)}{SDB(n) - SDB(n-1)}$$

where HP(n) is a current head pointer location at time n, HP(n-1) is a previous head pointer location at time n-1, SDB(n) is a current doorbell location (e.g., tail pointer location) at time n, and SDB(n-1) is a previous doorbell location at time n-1. In some examples, controller 415 may indicate the SQ doorbell at a given time and rate limit controller 445 may determine the MQ to SQ ratio based on at least two instances of the SQ doorbell received at different times. In some cases, rate limit controller 445 may continually or regularly adjust throttling of VM 405 based on the remaining space in MQ 430. In some cases, the scaling factor ($\beta$) may be based on the MQ to SQ ratio. In some cases, rate limit controller 445 may determine the value of the scaling factor. Additionally, or alternatively, the value of the scaling factor may be predetermined (e.g., based on a default scaling factor value). In some cases, the scaling factor may be set by the source host (e.g., by migration manager 435, by VM 405). In some cases, the scaling factor may be modified during drive operation by a settings command sent to a parent controller of the storage device. In some cases, the scaling factor may vary per child controller in the storage device. In some cases, the scaling factor may be based on a buffer occupancy percentage of MQ 430. As the buffer occupancy percentage, the scaling factor may be adjusted, increasing the rate limit as the buffer occupancy percentage increases.

In some cases, the scaling factor ($\beta$) may be based on a multiple or a factor of the rate calculation (e.g., $\beta = Rhp^2$, $\beta = Rhp^3$, $\beta = 2 * Rhp$, $\beta = 1/2 * Rhp$ ), based on a multiple or a factor of the average rate calculation (e.g., $\beta = AvgRhp^2$, $\beta = AvgRhp^3$, $\beta = 2 * AvgRhp$, $\beta = 1/2 * AvgRhp$), and/or based on a multiple or a factor of the MQ to SQ ratio (e.g., $\beta = (MQ\ to\ SQ\ ratio)^2$, $\beta = (MQ\ to\ SQ\ ratio)^3$, $\beta = 2 * (MQ\ to\ SQ\ ratio)$, $\beta = 1/2 * (MQ\ to\ SQ\ ratio)$). It is noted that rate limiting may be based on applying the scaling factor ($\beta$) to the rate calculation ($\beta * Rhp$), to the average rate calculation ($\beta * AvgRhp$), and/or to the MQ to SQ ratio calculation ($\beta * MQ\ to\ SQ\ ratio$). Depending on implementation, the strength of the throttling may be implemented as a reduction of win rate or 1/(throttling strength).

In some examples, throttling may be based on time and/or other variables. In some cases, a host may provide a signal that migration is started for a VM. This signal may be based on a new command. In some cases, the signal may be indicated in a field of a Get LBA Status message. In some cases, the signal may be based on a read of the migration data of a child through a parent controller/function, which can initiate a live migration. A storage device may determine and/or record the time of this signal as t_0. The storage device may modify the value of Beta by a time delta = (t_current - t_0) (e.g., $\beta = \beta * delta$). In some cases, the storage device may start to apply a time modifier after a period of time where the live migration is determined to be unsuccessful without throttling.

In some examples, a host may attempt to migrate the child with no throttling on the child. However, if the host determines some set amount of time has lapsed (e.g., 10 minutes, etc.) and the host has still not migrated the child, then the storage device may start applying the time delta based on (t_current - 10minutes) to the throttling factor. Applying the time delta to the throttling factor allows the throttling of the child slowly ramping up, while slowing down incoming activity on the child and allowing the host to catch up on data movements.

In some examples, a given system may include multiple VMs (e.g., multiple VMs managed by migration manager 335). In some cases, a system may include be multiple migration managers. In some cases, other VMs of system 300 may be undergoing migration concurrently with a migration of VM 305. Accordingly, the systems and methods described herein may be applied to VM 305 and/or multiple VMs of system 300. In some cases, a migration manager (e.g., migration manager 335) may include one MQ (e.g., MQ 330) per migration. In some cases, a storage device (e.g., the storage device of system 300) may monitor $R_{HP}$ of multiple MQs (e.g., of MQ 330 and one or more additional MQs). The storage device (e.g., via controller 315) may monitor an MQ to SQ ratio of all the VMs being migrated. In some cases, the storage device may monitor the ratio of [average HPs parsed by Host] / [average SDBs submitted by the VMs]. In some cases, the storage device may monitor an MQ to SQ ratio of all the VMs that are active on the drive.

In some examples, when migration logging starts, MQ 430 may be empty. Based on live migration, when VM activity occurs (e.g., user date write commands), MQ 430 receives those entries. In some cases, migration manager 435 may clear MQ 430 occasionally (e.g., keeping MQ 430 generally empty). This may be considered default operation. Accordingly, a default rate limit may be applied (e.g., no rate limit applied, zero rate limit).

In some examples, the source host may get relatively busy. As a result, migration manager 435 may not keep up with a growing number of entries in MQ 430. Rate limit controller 445 is configure to monitor MQ 430 and determine how full MQ 430 is at any given time (e.g., measured by the total number of entries in MQ 430, a total number of entries available to be filled in MQ 430, measured as a percent of how full MQ 430 is, or measured as a percent of how empty MQ 430 is, etc.).

In some examples, rate limit controller 445 may determine the buffer occupancy of MQ 430 exceeds a first threshold. Accordingly, rate limit controller 445 may apply avgRhp as a rate limit for throttling VM 405. In some cases, the source host (e.g., migration manager 435) may recover and catch up by parsing the entries of MQ 430 faster than they are being provided by the storage device (e.g., migration logger 425). As a result, the buffer occupancy of MQ 430 may pass back below the first threshold, and the storage device (e.g., rate limit controller 445) may revert to the default rate limit (e.g., no rate limit).

In some examples, rate limit controller 445 may determine that the buffer occupancy of MQ 430 exceeds the first threshold and may apply avgRhp as a rate limit for throttling VM 405. In some cases, rate limit controller 445 may determine that the buffer occupancy of MQ 430 exceeds a second threshold. As a result, rate limit controller 445 may increase the rate limit to further throttle VM 405.

In some examples, controller 415 may throttle VM 405 based on the rate limit. In some cases, controller 415 may throttle VM 405 by fetching entries from SQ 410 more slowly (e.g. stop fetching entries in some situations). In some cases, controller 415 may throttle VM 405 by reducing the arbitration win rate of VM 405 for drive resources that may be in contention (e.g., compute resources, DRAM, write buffer, NAND die, NAND channel, error correction code (ECC) decoders, ECC encoders, direct memory accesses (DMAs) of data from host DRAM, etc.). In some cases, controller 415 may throttle VM 405 by providing entries in CQ 420 more slowly (e.g., stop providing entries), by increasing the latency on entries to CQ 420, and/or by reducing the number of entries allowed to be added to CQ 420 over a period of time.

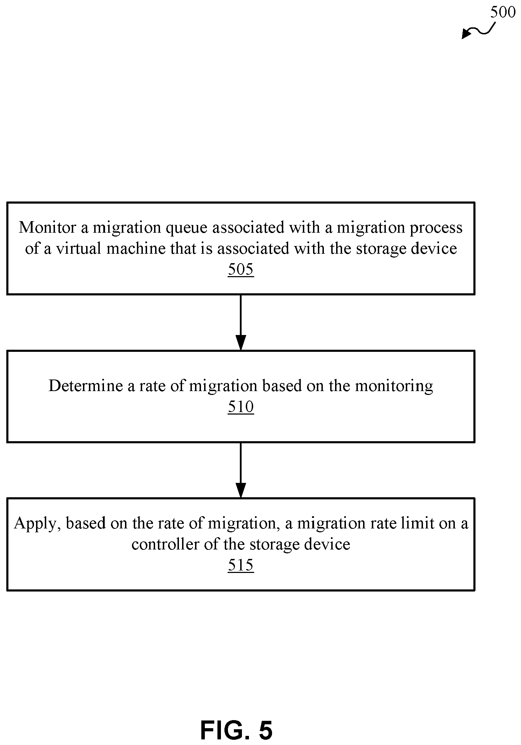

FIG. 5 depicts a flow diagram illustrating an example method 500 associated with the disclosed systems, in accordance with example implementations described herein. In some configurations, method 500 may be implemented by control circuit 140 of FIG. 1 and/or control circuit 230 of FIG. 2. In some configurations, method 500 may be implemented in conjunction with machine 105, components of machine 105, or any combination thereof. The depicted method 500 is just one implementation and one or more operations of method 500 may be rearranged, reordered, omitted, and/or otherwise modified such that other implementations are possible and contemplated.

At 505, method 500 may include monitoring, by a storage device, a migration queue associated with a migration process of a virtual machine that is associated with the storage device. For example, rate limit controller 445, in conjunction with a storage device (e.g., storage device 120) may monitor a migration queue associated with a migration process of a virtual machine that is associated with the storage device.

At 510, method 500 may include determining, by the storage device, a rate of migration based on the monitoring. For example, rate limit controller 445 may determine a rate of migration based on the monitoring.

At 515, method 500 may include applying, by the storage device and based on the rate of migration, a migration rate limit on a controller of the storage device. For example, rate limit controller 445 may apply, based on the rate of migration, a migration rate limit on a controller of the storage device (e.g., controller 415).

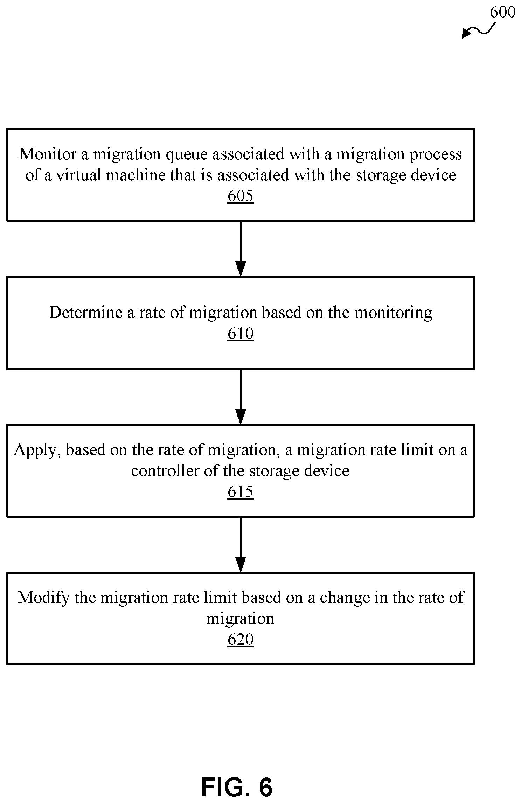

FIG. 6 depicts a flow diagram illustrating an example method 600 associated with the disclosed systems, in accordance with example implementations described herein. In some configurations, method 600 may be implemented by control circuit 140 of FIG. 1 and/or control circuit 230 of FIG. 2. In some configurations, method 600 may be implemented in conjunction with machine 105, components of machine 105, or any combination thereof. The depicted method 600 is just one implementation and one or more operations of method 600 may be rearranged, reordered, omitted, and/or otherwise modified such that other implementations are possible and contemplated.

At 605, method 600 may include monitoring, by a storage device, a migration queue associated with a migration process of a virtual machine that is associated with the storage device. For example, rate limit controller 445, in conjunction with a storage device (e.g., storage device 120) may monitor a migration queue associated with a migration process of a virtual machine that is associated with the storage device.

At 610, method 600 may include determining, by the storage device, a rate of migration based on the monitoring. For example, rate limit controller 445 may determine a rate of migration based on the monitoring.

At 615, method 600 may include applying, by the storage device and based on the rate of migration, a migration rate limit on a controller of the storage device. For example, rate limit controller 445 may apply, based on the rate of migration, a migration rate limit on a controller of the storage device (e.g., controller 415).

At 620, method 600 may include modifying, by the storage device, the migration rate limit based on a change in the rate of migration. For example, rate limit controller 445 may determine a change in the rate of migration and modify the migration rate limit (e.g., raising migration rate limit, lowering migration rate limit, scaling migration rate limit) based on the change in the rate of migration.

In the examples described herein, the configurations and operations are example configurations and operations, and may involve various additional configurations and operations not explicitly illustrated. In some examples, one or more aspects of the illustrated configurations and/or operations may be omitted. In some embodiments, one or more of the operations may be performed by components other than those illustrated herein. Additionally, or alternatively, the sequential and/or temporal order of the operations may be varied.

Certain embodiments may be implemented in one or a combination of hardware, firmware, and software. Other embodiments may be implemented as instructions stored on a computer-readable storage device, which may be read and executed by at least one processor to perform the operations described herein. A computer-readable storage device may include any nontransitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device," "wireless device" and "user equipment" (UE) as used herein refers to a wireless communication device such as a cellular telephone, smartphone, tablet, netbook, wireless terminal, laptop computer, a femtocell, High Data Rate (HDR) subscriber station, access point, printer, point of sale device, access terminal, or other personal communication system (PCS) device. The device may be either mobile or stationary.

As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as 'communicating', when only the functionality of one of those devices is being claimed. The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

Some embodiments may be used in conjunction with various devices and systems, for example, a Personal Computer (PC), a desktop computer, a mobile computer, a laptop computer, a notebook computer, a tablet computer, a server computer, a handheld computer, a handheld device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some embodiments may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multi-standard radio devices or systems, a wired or wireless handheld device, e.g., a Smartphone, a Wireless Application Protocol (WAP) device, or the like.

Some embodiments may be used in conjunction with one or more types of wireless communication signals and/or systems following one or more wireless communication protocols, for example, Radio Frequency (RF), Infrared (IR), Frequency-Division Multiplexing (FDM), Orthogonal FDM (OFDM), Time-Division Multiplexing (TDM), Time-Division Multiple Access (TDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth™, Global Positioning System (GPS), Wi-Fi, Wi-Max, ZigBee™, Ultra-Wideband (UWB), Global System for Mobile communication (GSM), 2G, 2.5G, 3G, 3.5G, 4G, Fifth Generation (5G) mobile networks, 3GPP, Long Term Evolution (LTE), LTE advanced, Enhanced Data rates for GSM Evolution (EDGE), or the like. Other embodiments may be used in various other devices, systems, and/or networks.

Although an example processing system has been described above, embodiments of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more components of computer program instructions, encoded on computer storage medium for execution by, or to control the operation of, information/data processing apparatus. Alternatively, or in addition, the program instructions can be encoded on an artificially-generated propagated signal, for example a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (for example multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, for example an FPGA (field programmable gate array) or an ASIC (application-specific integrated circuit). The apparatus can also include, in addition to hardware, code that creates an execution environment for the computer program in question, for example code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a component, component, subroutine, object, or other unit suitable for use in a computing environment. A computer program may, but need not, correspond to a file in a file system. A program can be stored in a portion of a file that holds other programs or information/data (for example one or more scripts stored in a markup language document), in a single file dedicated to the program in question, or in multiple coordinated files (for example files that store one or more components, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, for example magnetic, magneto-optical disks, or optical disks. However, a computer need not have such devices. Devices suitable for storing computer program instructions and information/data include all forms of non-volatile memory, media and memory devices, including by way of example semiconductor memory devices, for example EPROM, EEPROM, and flash memory devices; magnetic disks, for example internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, for example a CRT (cathode ray tube) or LCD (liquid crystal display) monitor, for displaying information/data to the user and a keyboard and a pointing device, for example a mouse or a trackball, by which the user can provide input to the computer. Other kinds of devices can be used to provide for interaction with a user as well; for example, feedback provided to the user can be any form of sensory feedback, for example visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, for example as an information/data server, or that includes a middleware component, for example an application server, or that includes a front-end component, for example a client computer having a graphical user interface or a web browser through which a user can interact with an embodiment of the subject matter described herein, or any combination of one or more such back-end, middleware, or front-end components. The components of the system can be interconnected by any form or medium of digital information/data communication, for example a communication network. Examples of communication networks include a local area network ("LAN") and a wide area network ("WAN"), an inter-network (for example the Internet), and peer-to-peer networks (for example ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (for example an HTML page) to a client device (for example for purposes of displaying information/data to and receiving user input from a user interacting with the client device). Information/data generated at the client device (for example a result of the user interaction) can be received from the client device at the server.

While this specification contains many specific embodiment details, these should not be construed as limitations on the scope of any embodiment or of what may be claimed, but rather as descriptions of features specific to particular embodiments. Certain features that are described herein in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain embodiments, multitasking and parallel processing may be advantageous.

Many modifications and other examples described herein set forth herein will come to mind to one skilled in the art to which these embodiments pertain having the benefit of the teachings presented in the foregoing descriptions and the associated drawings. Therefore, it is to be understood that the embodiments are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method of throttling a virtual machine under migration from a source host to a target host, the source host being communicatively coupled to a storage device (120), the method comprising:

    monitoring (505; 605), by the storage device (120), a migration queue (430) holding migration tasks for migrating the virtual machine (405) from the source host to the target host;
    determining (510; 610), by the storage device (120), a rate of migration based on the monitoring; and
    applying (515; 615), by the storage device (120) and based on the rate of migration, a migration rate limit on a controller (315; 415) of the storage device (120) to throttle the virtual machine (405) based on the migration rate limit.

2. The method of claim 1, wherein applying the migration rate limit further comprises at least one of:

    applying a first rate limit based on an occupancy of the migration queue (430) being less than a first threshold,
    applying a second rate limit based on the occupancy of the migration queue (430) being greater than the first threshold and less than a second threshold, or
    applying a third rate limit based on the occupancy of the migration queue (430) being greater than the second threshold.

3. The method of claim 2, wherein the first rate limit is based on a default rate limit.

4. The method of claim 2 or 3, wherein:

the second rate limit is based on an average rate of head pointer movement ($AvgR_{HP}$) of the migration queue (430) that is determined based on the monitoring, and
the third rate limit is based on scaling the average rate of head pointer movement ($AvgR_{HP}$) according to a scaling factor ($\beta$).

5. The method of any one of claims 2 to 4, wherein applying the migration rate limit further comprises at least one of:

removing the second rate limit and applying the first rate limit based on the occupancy of the migration queue (430) being less than the first threshold, or
removing the third rate limit and applying the second rate limit based on the occupancy of the migration queue (430) being less than the second threshold.

6. The method of any one of claims 1 to 5, further comprising determining a command insertion rate of a submission queue (410) of the virtual machine (405), wherein applying the migration rate limit further comprises modifying (620) the migration rate limit based on the command insertion rate.

7. The method of claim 6, wherein a scaling factor ($\beta$) of the migration rate limit is based on the command insertion rate.

8. The method of any one of claims 1 to 7, wherein the storage device comprises a solid-state drive storing data associated with the virtual machine (405).

9. A device (105) comprising:

at least one memory (115); and
at least one processor (110) coupled with the at least one memory (115) and configured to perform the method of any one of claims 1 to 8.

10. A non-transitory computer-readable medium storing code that comprises instructions executable by a processor (110) of a device (105), which when executed by the processor (110), cause the device (105) to perform the method of any one of claims 1 to 8.

**Patentansprüche**

1. Verfahren zum Drosseln einer virtuellen Maschine während einer Migration von einem Quell-Host zu einem Ziel-Host, wobei der Quell-Host kommunikativ mit einer Speichervorrichtung (120) gekoppelt ist, wobei das Verfahren umfasst:

Überwachen (505; 605) einer Migrationswarteschlange (430) durch die Speichervorrichtung (120), die Migrationsaufgaben zum Migrieren der virtuellen Maschine (405) von dem Quell-Host zu dem Ziel-Host enthält;
Bestimmen (510; 610) einer Migrationsrate durch die Speichervorrichtung (120) auf der Grundlage des Überwachens; und
Anwenden (515; 615) einer Migrationsratenbegrenzung durch die Speichervorrichtung (120) und auf der Grundlage der Migrationsrate auf einen Controller (315; 415) der Speichervorrichtung (120), um die virtuelle Maschine (405) auf der Grundlage der Migrationsratenbegrenzung zu drosseln.

2. Verfahren nach Anspruch 1, wobei das Anwenden der Migrationsratenbegrenzung ferner mindestens eines des Folgenden umfasst:

Anwenden einer ersten Ratenbegrenzung auf der Grundlage, dass eine Belegung der Migrationswarteschlange (430) kleiner als ein erster Schwellenwert ist,
Anwenden einer zweiten Ratenbegrenzung auf der Grundlage, dass die Belegung der Migrationswarteschlange (430) größer als der erste Schwellenwert und kleiner als ein zweiter Schwellenwert ist, oder
Anwenden einer dritten Ratenbegrenzung auf der Grundlage, dass die Belegung der Migrationswarteschlange (430) größer als der zweite Schwellenwert ist.

3. Verfahren nach Anspruch 2, wobei die erste Ratenbegrenzung auf einer Standard-Ratenbegrenzung basiert.

4. Verfahren nach Anspruch 2 oder 3, wobei:

die zweite Ratenbegrenzung auf einer durchschnittlichen Bewegungsrate des Head-Pointers (AvgRHP) der Migrationswarteschlange (430) basiert, die auf der Grundlage des Überwachens bestimmt wird, und
die dritte Ratenbegrenzung auf einem Skalieren der durchschnittlichen Bewegungsrate des Head-Pointers (AvgRHP) gemäß einem Skalierungsfaktor ($\beta$) basiert.

5. Verfahren nach einem der Ansprüche 2 bis 4, wobei das Anwenden der Migrationsratenbegrenzung ferner mindestens eines des Folgenden umfasst:

Entfernen der zweiten Ratenbegrenzung und Anwenden der ersten Ratenbegrenzung auf der Grundlage, dass die Belegung der Migrationswarteschlange (430) kleiner als der erste Schwellenwert ist, oder Entfernen der dritten Ratenbegrenzung und Anwenden der zweiten Ratenbegrenzung auf der Grundlage, dass die Belegung der Migrationswarteschlange (430) kleiner als der zweite Schwellenwert ist.

6. Verfahren nach einem der Ansprüche 1 bis 5, ferner umfassend Bestimmen einer Befehlseinfügungsrate einer Submission-Queue (410) der virtuellen Maschine (405), wobei das Anwenden der Migrationsratenbegrenzung ferner Modifizieren (620) der Migrationsratenbegrenzung auf der Grundlage der Befehlseinfügungsrate umfasst.

7. Verfahren nach Anspruch 6, wobei ein Skalierungsfaktor (β) der Migrationsratenbegrenzung auf der Befehlseinfügungsrate basiert.

8. Verfahren nach einem der Ansprüche 1 bis 7, wobei die Speichervorrichtung ein Solid-State-Laufwerk (SSD) umfasst, das der virtuellen Maschine (405) zugeordnete Daten speichert.

9. Vorrichtung (105), umfassend:

mindestens einen Speicher (115); und mindestens einen Prozessor (110), der mit dem mindestens einen Speicher (115) gekoppelt und dafür konfiguriert ist, das Verfahren nach einem der Ansprüche 1 bis 8 auszuführen.

10. Nichtflüchtiges computerlesbares Medium, das Code speichert, der Anweisungen umfasst, die von einem Prozessor (110) einer Vorrichtung (105) ausführbar sind und die, wenn sie von dem Prozessor (110) ausgeführt werden, die Vorrichtung (105) veranlassen, das Verfahren nach einem der Ansprüche 1 bis 8 auszuführen.

## Revendications

1. Procédé de bridage d'une machine virtuelle en cours de migration d'un hôte source vers un hôte cible, l'hôte source étant couplé en communication à un dispositif de stockage (120), le procédé comprenant :

surveiller (505 ; 605), par le dispositif de stockage (120), une file d'attente de migration (430) contenant des tâches de migration pour migrer la machine virtuelle (405) de l'hôte source vers l'hôte cible ; déterminer (510 ; 610), par le dispositif de stockage (120), un débit de migration sur la base de la surveillance ; et appliquer (515 ; 615), par le dispositif de stockage (120) et sur la base du débit de migration, une limite de débit de migration à un contrôleur (315 ; 415) du dispositif de stockage (120) de manière à brider la machine virtuelle (405) sur la base de la limite de débit de migration.

2. Procédé selon la revendication 1, dans lequel l'application de la limite de débit de migration comprend en outre au moins l'une des opérations suivantes :

appliquer une première limite de débit sur la base du fait qu'une occupation de la file d'attente de migration (430) est inférieure à un premier seuil, appliquer une deuxième limite de débit sur la base du fait que l'occupation de la file d'attente de migration (430) est supérieure au premier seuil et inférieure à un deuxième seuil, ou appliquer une troisième limite de débit sur la base du fait que l'occupation de la file d'attente de migration (430) est supérieure au deuxième seuil.

3. Procédé selon la revendication 2, dans lequel la première limite de débit est basée sur une limite de débit par défaut.

4. Procédé selon la revendication 2 ou 3, dans lequel :

la deuxième limite de débit est basée sur une vitesse moyenne de déplacement du pointeur de tête de la file d'attente de migration (430), qui est déterminée sur la base de la surveillance, et la troisième limite de débit est basée sur une mise à l'échelle de la vitesse moyenne de déplacement du pointeur de tête ($A_{vg}R_{HP}$) selon un facteur d'échelle (β).

5. Procédé selon l'une quelconque des revendications 2 à 4, dans lequel l'application de la limite de débit de migration comprend en outre au moins l'une des opérations suivantes :

supprimer la deuxième limite de débit et appliquer la première limite de débit sur la base du fait que l'occupation de la file d'attente de migration (430) est inférieure au premier seuil, ou supprimer la troisième limite de débit et appliquer la deuxième limite de débit sur la base du fait que l'occupation de la file d'attente de migration (430) est inférieure au deuxième seuil.

6. Procédé selon l'une quelconque des revendications 1 à 5, comprenant en outre la détermination d'un débit d'insertion de commandes d'une file de soumission (410) de la machine virtuelle (405), dans lequel l'application de la limite de débit de migration comprend en outre la modification (620) de la limite de débit de migration sur la base du débit d'insertion de commandes.

7. Procédé selon la revendication 6, dans lequel un facteur d'échelle ($\beta$) de la limite de débit de migration est basé sur le débit d'insertion de commandes.

8. Procédé selon l'une quelconque des revendications 1 à 7, dans lequel le dispositif de stockage comprend un disque SSD stockant des données associées à la machine virtuelle (405).

9. Dispositif (105) comprenant :

> au moins une mémoire (115) ; et
> au moins un processeur (110) couplé à ladite au moins une mémoire (115) et configuré pour exécuter le procédé selon l'une quelconque des revendications 1 à 8.

10. Support non transitoire lisible par ordinateur stockant un code comprenant des instructions exécutables par un processeur (110) d'un dispositif (105), lesquelles, lorsqu'elles sont exécutées par le processeur (110), amènent le dispositif (105) à exécuter le procédé selon l'une quelconque des revendications 1 à 8.

**FIG. 1**

105

Storage Device 120

Processor 110

Clock 205

Mem. Contr. 125

Network Connector 210

Control Circuit 230

Memory 115

215

User Interface 220

I/O Engine 225

Control Circuit 230

**FIG. 2**

FIG. 3

**FIG. 4**

500

Monitor a migration queue associated with a migration process
of a virtual machine that is associated with the storage device
505

Determine a rate of migration based on the monitoring
510

Apply, based on the rate of migration, a migration rate limit on a
controller of the storage device
515

**FIG. 5**

600

Monitor a migration queue associated with a migration process of a virtual machine that is associated with the storage device
605

Determine a rate of migration based on the monitoring
610

Apply, based on the rate of migration, a migration rate limit on a controller of the storage device
615

Modify the migration rate limit based on a change in the rate of migration
620

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105930202 A

- CN 105138408 A